# EUROPÄISCHE PATENTANMELDUNG

(11) **EP 1 403 489 A1**
(43) Veröffentlichungstag der Anmeldung: **31.03.2004**
(21) Anmeldenummer: 02405841.4
(22) Anmeldetag: 30.09.2002
(51) Int. Cl.: F02D 33/02

(54) **Verfahren zum Betreiben einer Brennkraftmaschine**

(30) Priorität: 24.09.2002 US 412811
(71) Anmelder: ABB Turbo Systems AG, 5400 Baden (CH)
(72) Erfinder: Neuenschwander, Peter, 8006 Zürich (CH); Codan, Ennio, 5212 Hausen bei Brugg (CH); Bernard, Olivier, 5400 Baden (CH)
(74) Vertreter: ABB Patent Attorneys

(57) **Zusammenfassung**

Verfahren zum Betreiben einer Brennkraftmaschine (7) bei dem im stationärem Betrieb die Ausregelung mindestens eines Brennkraftmaschinen-Ist-Wertes mit Hilfe einer ersten Reglereinheit (4) auf einen Brennkraftmaschinen-Soll-Wert erfolgt, der nur von der Brennkraftmaschine (7) abhängt, und dass bei Lastaufnahme mit dem Einsetzen der Hilfsmassnahme (6) die Ausregelung mit Hilfe einer zweiten Reglereinheit (5) in Abhängigkeit von der Brennkraftmaschine (7) und der Hilfsmassnahme (6) erfolgt.

## Beschreibung

### Technisches Gebiet

Die Erfindung bezieht sich auf das Gebiet der Brennkraftmaschinen insbesondere auf ein Verfahren zum Betreiben von Brennkraftmaschinen gemäss dem Oberbegriff des Patentanspruches 1.

Grossmotoren müssen in der Regel nicht so hohe Anforderungen hinsichtlich des transienten Verhaltens erfüllen, wie dies bei den kleineren Motoren für den Antrieb von Fahrzeugen üblich ist. Trotzdem gilt auch für Grossmotoren, dass mehr oder weniger grosse Variationen von Last oder Drehzahl vorkommen. Ein gutes dynamische Verhalten, das in Form eines guten Beschleunigungsverhalten für kleinere Motoren einen Wettbewerbsvorteil darstellt, wird auch für grössere und grosse Motoren, wie sie für Flussschiffe und schnelle Fährschiffe eingesetzt werden, immer wichtiger, da auch hier immer höhere Anforderungen beispielsweise an die Manövrierfähigkeit gestellt werden. Eine höhere Umweltsensibilität und neue gesetzliche Vorschriften führen weiter dazu, dass heute im transienten Betrieb Russemissionen immer weniger toleriert werden. Die Bedeutung des dynamischen Verhaltens von Brennkraftmaschinen hat daher in der jüngeren Vergangenheit erheblich zugenommen.

### Stand der Technik

Um das dynamische Verhalten von Brennkraftmaschinen zu verbessern, werden heute in der Regel Hilfsmassnahmen vorgesehen, die jeweils zum Einsatz kommen, wenn von der Brennkraftmaschine schnell eine höhere oder tiefere Leistung gefordert, also wenn z.B. von einem Fahrzeugmotor eine Beschleunigung verlangt oder ein Bremsmanöver eingeleitet wird. Als Hilfsmassnahmen kann eine angepasste Regelung der Brennstoffzufuhr in die Zylinder z.B. in Abstimmung mit der Temperatur, der Drehzahl oder ähnlichen Grössen vorgesehen sein. Zusätzlich oder an stelle der Brennstoffregelung kann als Hilfsmassnahme eine Lufteinblasung direkt in die Zylinder vorgesehen sein. Bei aufgeladenen Brennkraftmaschinen kann als Hilfsmassnahme eine Lufteinblasung in einen Verdichter des zugeordneten Turboladers oder auch eine Lufteindüsung in bzw. vor dessen Turbine vorgesehen sein. Bei einem Turbolader mit variabler Turbinengeometrie kann die Geometrie angepasst werden, bei einem Turbolader mit einem Elektroantrieb kann der Elektroantrieb zugeschaltet werden, es können turbinenseitig ein Waste Gate und/oder verdichterseitig eine Bypassleitung zum Einsatz kommen.

Die Hilfsmassnahmen und die Brennkraftmaschine müssen aufeinander abgestimmt arbeiten. Hierzu werden heute in der Regel, vor allem bei Grossbrennkraftmaschinen, Regelsysteme verwendet, die nur mit einem Satz oder einigen wenigen Sätzen von Parametern programmiert sind, welche auf Referenz- oder Worst-Case-Bedingungen abgestimmt sind. Dies führt dazu, dass entweder das Potential der Hilfsmassnahmen für eine optimale Brennkraftmaschinebeschleunigung nicht immer genutzt wird, oder dass bei ungünstigen Bedingungen zuviel Brennstoff verbrannt wird, was zu Russbildung oder hoher thermischer Belastung führen kann.

### Darstellung der Erfindung

Es ist deshalb Aufgabe der Erfindung, ein Verfahren zum Betreiben einer Brennkraftmaschine der eingangs genannten Art zu schaffen, welches das dynamische Verhalten der Brennkraftmaschine, vor allem im transienten Betrieb, verbessert und so für eine bessere Beschleunigung und/oder eine geringere Russbildung sorgt.

Diese Aufgabe löst ein Verfahren gemäss den Merkmalen des Patentanspruches 1. Dabei ist für eine Brennkraftmaschine mit mindestens einer Brennkammer im Falle einer Lastaufnahme eine Hilfsmassnahme zur Beschleunigung der Brennkraftmaschine vorgesehen und mindestens ein Brennkraftmaschinen-Ist-Wert wird auf einen zugehörigen Brennkraftmaschinen-Soll-Wert ausgeregelt. Dadurch, dass die Ausregelung in Abhängigkeit der Hilfsmassnahme erfolgt, können die Vorteile der Hilfsmassnahme besser und vor allem zeitlich schneller genutzt werden, was eine bessere Beschleunigung erlaubt und bei entsprechender Wahl von Brennkraftmaschinen-Ist-Wert, Brennkraftmaschinen-Soll-Wert und Hilfsmassnahme Russbildung bzw. unvollständige Verbrennung des Brennstoffes verhindert.

Am einfachsten wird als Brennkraftmaschinen-Soll-Wert und/oder als Brennkraftmaschinen-Schwell-Wert für die Ausregelung des Brennkraftmaschinen-Ist-Wertes eine von der Hilfsmassnahme abhängige Funktion oder eine von der Hilfsmassnahme abhängige Tabellenzuordnung gewählt. Ein Beispiel für so einen solchen Schwellwert ist die Russbegrenzung, die je nach dem ob die Hilfsmassnehme eingeschaltet ist oder nicht einen anderen Wert besitzt.

Sehr vorteilhaft ist es, wenn wenigstens ein Hilfsmassnahmen-Ist-Wert während des Betriebes mit der Hilfsmassnahme aktuell erfasst wird und die Ausregelung wenigstens eines Brennkraftmaschine-Ist-Wertes abhängig von diesem aktuell erfassten Hilfsmassnahmen-Ist-Werte erfolgt. Je nach gewünschtem Ergebnis kann es sehr sinnvoll sein, mehrere Hilfsmassnahmen-Ist-Werte zu erfassen, in einer Funktion oder Tabellenzuordnung zusammenzufassen und den Brennkraftmaschinen-Ist-Wert abhängig von dieser auf mehreren Hilfsmassnahmen-Ist-Werten basierenden Funktion oder Tabellenzuordnung auszuregeln. Auch können mehrere Brennkraftmaschinen-Ist-Werte auf mehrere einzelne Hilfsmassnahmen-Ist-Werte oder auf Funktionen und Tabellenzuordnungen aus mehreren Hilfsmassnahmen-Ist-Werten ausgeregelt werden.

Sehr vorteilhaft ist es, wenigstens einen der mindestens einen Hilfsmassnahmen-Ist-Werte mit einem Hilfsmassnahmen-Schwellwert zu vergleichen und bei Erreichen oder Überschreiten bzw. Unterschreiten des Hilfsmassnahmen-Schwellwertes die Hilfsmassnahme zurückzufahren oder abzuschalten. Dies insbesondere dann, wenn es sich um Hilfsmassnahmen-Schwellwerte handelt, die bei längerem oder übermässigem Überschreiten bzw. Unterschreiten zu einem Schaden an der Brennkraftmaschine oder an der Vorrichtung zur Durchführung der Hilfsmassnahme führen. In diesem Zusammenhang kann es auch vorteilhaft sein, wenigstens einer der mindestens einen Brennkraftmaschinen-Ist-Werte mit einem Brennkraftmaschinen-Schwellwert zu vergleichen und bei Erreichen oder Überschreiten bzw. Unterschreiten des Brennkraftmaschinen-Schwellwertes die Hilfsmassnahme und oder die Brennkraftmaschine zurückzufahren oder abzuschalten.

Als Sollwerte sowohl für die Brennkraftmaschine als auch für die Hilfsmassnahme können Funktionen oder Tabellenzuordnungen von Schwellwerten verwendet werden, so dass der jeweilige Ist-Wert auf den jeweiligen Schwellwert ausgeregelt wird, wobei der Schwellwert so ausgelegt ist, dass nur bei seinem Überschreiten bzw. Unterschreiten die Hilfsmassnahme und oder die Brennkraftmaschine zurückgefahren bzw. abgeschaltet wird.

Für einen optimalen Einsatz der Hilfsmassnahme ist es vorteilhaft, einen oder mehrere der mindestens einen Hilfsmassnahmen-Ist-Werte auf einen Hilfsmassnahmen-Soll-Wert auszuregeln.

Da sich die Hilfsmassnahmen-Ist-Werte und die Brennkraftmaschinen-Ist-Werte gegenseitig in komplexer Weise beeinflussen, kann es sinnvoll sein, ein oder mehrere der mindestens einen Hilfsmassnahmen-Schwellwerte und/oder ein oder mehrere der Hilfsmassnahmen-Soll-Werte als Funktion von Brennkraftmaschinen-Werten im Sinne einer ausführbaren Rechenoperation oder einer wählbaren Tabellenzuordnung zu benutzen.

Als Hilfsmassnahmen in einem solchen Verfahren kann ein Einblasen eines verbrennungsfördernden Gases, wie beispielsweise Luft, respektive ein Einblasen eines Verbrennungsgemisches in einen Receiver vor der mindestens einen Brennkammer und/oder ein Einblasen eines verbrennungsfördernden Gases resp. eines Verbrennungsgemisch direkt in die mindestens eine Brennkammer und/oder Variable Ventilsteuerzeiten und/oder bei Vorhandensein eines Turboladers eine Eindüsung von Luft bzw. eines Verbrennungsgemisches in den Verdichter und/oder eine Lufteindüsung in bzw. vor einer Turbine des Turboladers, und/oder die Nutzung eines Waste Gates parallel zur Turbine und/oder die Nutzung einer Bypassleitung von einem Verdichter des Turboladers zu seiner Turbine und/oder bei Vorhandensein eines Turboladers mit variabler Turbinengeometrie eine entsprechende Änderung der Turbinengeometrie und/oder bei Vorhandensein eines Turboladers mit elektrischen Maschine ein Einsatz der elektrischen Maschine vorgesehen sein. Dementsprechend können als Hilfsmassnahmen-Ist-Werte beispielsweise folgende Grössen erfasst werden: Druck und Temperatur des eingeblasenen, verbrennungsfördernden Gases (Luft, Sauerstoff), das Verhältnis von Verbrennungsluft zu Brennstoffgemisch; beim Einblasen von Luft oder Gas aus einem Vorratsbehälter der Füllstand des Vorratsbehälters; bei Vorhandensein eines Turboladers dessen Drehzahl, Lagertemperatur, das Verdichterdruckverhältnis, im Turbolader gemessene Vibrationen, Lagerschwingungen und viele andere, dem Fachmann bekannte Grössen.

Als Brennkraftmaschinen-Ist-Wert(e) können beispielsweise folgende Grössen dienen: die Drehzahl der Brennkraftmaschine, die einer oder mehreren Brennkammer(n) zugeführte Brennstoffmenge, das Verbrennungsluftverhältnis, die Temperatur des Abgases, der Zylinderdruck, der Receiverdruck, der Öldruck, die Lagertemperatur, usw.. Besonders vorteilhaft ist es, wenn mehrere Brennkammern vorhanden sind, die Brennstoffmenge für jede Brennkammer als eigenständigen Brennkraftmaschinen-Ist-Wert zu erfassen und separat auszuregeln.

Als Hilfsmassnahmen-Schwellwerte können beispielsweise der Füllstand eines Vorratsbehälters für Druckluft bzw. Gas dienen oder bei Vorhandensein eines Turboladers, die maximal zulässige Turboladerdrehzahl, die Temperatur vor der Turbine. Als Brennkraftmaschinen-Schwellwerte können zum Beispiel der maximal zulässige Zylinderdruck, der Receiverdruck oder das Verbrennungsluftverhältnis dienen.

Wird die zugeführte Brennstoffmenge als Brennkraftmaschinen-Ist-Wert verwendet, so ist es von Vorteil, als Sollwert eine Funktion des Receiverdruckes und der gewählten Hilfsmassnahme zu verwenden, da so eine optimale Verbrennung des Brennstoffes in der oder den Brennkammern ermöglicht wird. Sehr gut ausregeln lässt sich die Brennstoffmenge, wenn der Brennstoff den einzelnen Brennkammern mit Hilfe eines Common-Rail-Systems zugeführt wird.

Bei Verfahren, wie dem hier beschriebenen, bei denen den Brennkammern einer Brennkraftmaschine neben dem Brennstoffgemisch zumindest zeitweise Sauerstoff, Luft oder ein anderes verbrennungsförderndes Gas zugeführt wird, ist es sehr vorteilhaft, die Zufuhr dieses Gases mittels eines Hochdruckleitungssytems analog den bekannten Common-Rail-Systemen zu gewährleisten. In einem solchen Hochdruckleitungssystem lässt sich nämlich die zugeführte Gasmenge sehr einfach und effizient regeln.

Werden sowohl die Brennstoffmenge als auch die Menge des eingeblasenen, verbrennungsfördernden Gases geregelt, so ist es besonders vorteilhaft die Brennstoffmenge und die Gasmenge aufeinander abzustimmen, und zwar so, dass es ohne Russbildung zur möglichst vollständigen Verbrennung der zugeführten Brennstoffmenge kommt. Man erzielt so einen optimierten Kompromiss zwischen optimaler Beschleunigung und Vermeidung von Russemissionen

Werden sowohl die zugeführte Brennstoffmenge als auch die Zufuhr des verbrennungsfördernden Gases geregelt, so ist eine Regelung mit Hilfe eines gemeinsamen Reglers im Allgemeinen die einfachste und kostengünstigste Lösung. Als verbrennungsförderndes Gas können, wie gesagt, Luft, Sauerstoff, ein Luft- bzw. Sauerstoff-Gasgemisch oder andere bekannte verbrennungsfördernde Gase verwendet werden. Die Rezirkulierung von Abgasen, kann ebenfalls über eine solche Regelung mit einbezogen werden.

Das Verfahren ist besonders effizient, wenn bei stationärem Betrieb die Ausregelung des mindestens einen Brennkraftmaschinen-Ist-Wertes mit Hilfe einer ersten Reglereinheit auf einen rein von der Brennkraftmaschine abhängigen Brennkraftmaschinen-Soll-Wert erfolgt und bei Lastaufnahme, mit dem Einsetzen der Hilfsmassnahmen die Ausregelung mit Hilfe einer zweiten Reglereinheit in Abhängigkeit von der Brennkraftmaschine und der Hilfsmassnahme erfolgt, wobei der Wechsel von der ersten Reglereinheit auf die zweite Reglereinheit manuell oder mit Hilfe des ersten Reglers oder mittels einer Hilfsmassnahmensteuerung oder mittels einer übergeordneten Regeleinheit erfolgt.

Weitere bevorzugte Ausführungsformen sind Gegenstand weiterer Patentansprüche.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen rein schematisch:
- Figur 1: zeigt graphisch das Verfahren unter Verwendung zweier Reglereinheiten für die zwei Betriebszustände;
- Figur 2: die Änderung einer Schwellwertfunktion bei Änderung des Betriebszustandes; und
- Figur 3: ein Einspritzsystem für eine Brennkraftmaschine mit mehreren Brennkammern, wobei sowohl der Brennstoff als auch ein verbrennungsförderndes Gas den Brennkammern mit Hilfe eines Common Rail Systems zugeführt werden.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

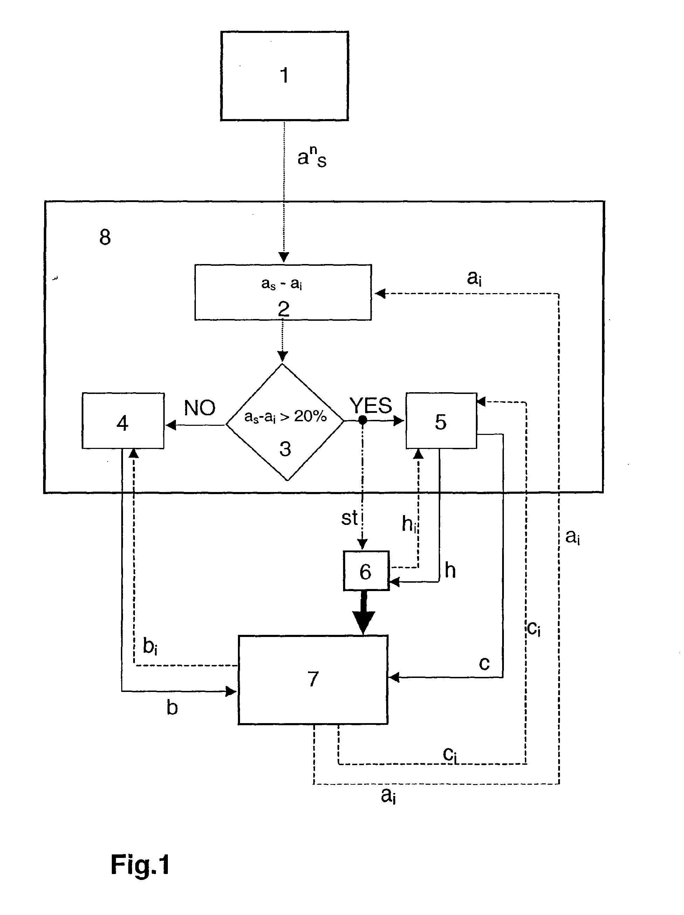

Die Figur 1 zeigt eine Prinzipskizze für das vorgeschlagene Verfahren am Beispiel einer Brennkraftmaschine 7 für einen Schiffsantrieb. Die Brennkraftmaschine 7 läuft beispielsweise unter Teillast bei Nenndrehzahl (z. B. Generatorantrieb) oder reduzierter Drehzahl (z. B. Schiffsantrieb). Von der Brennkraftmaschine 7 wird die Drehzahl als Brennkraftmaschinen-Ist-Wert aᵢ aktuell erfasst, Pfeil aᵢ, und mit einem Brennkraftmaschinen-Soll-Wert aₛ verglichen (Box 2). Solange die Differenz zwischen dem Brennkraftmaschinen-Soll-Wert aₛ für die Drehzahl und dem erfassten Istwert aᵢ der Drehzahl geringer ist als ein Schwellwert von hier beispielsweise 20% des Sollwertes aₛ, erfolgt die Regelung des Betriebes der Brennkraftmaschine 7 über mit Hilfe eines ersten Regelregimes, symbolisiert durch eine erste Regeleinheit 4. Die erste Regeleinheit 4 erhält hierfür aktuell erfasste Betriebsdaten, Pfeil bᵢ, von der Brennkraftmaschine 7 und sendet Regelsignale, Pfeil b, zur Regelung der verschiedenen Parameter der Brennkraftmaschine 7 an diese zurück.

Wird zwischen dem aktuell vorgegebenen Brennkraftmaschinen-Soll-Wert aₛ und dem aktuell erfassten Brennkraftmaschinen-Ist-Wert aᵢ eine Differenz festgestellt, die grösser als der Schwellwert ist, in diesem Beispiel 20% des Sollwertes aₛ, so wird eine Hilfsmassnahme 6 zugeschaltet, Pfeil "st". Damit die Brennkraftmaschine 7 diese Hilfsmassnahme 6 optimal nutzen kann, ist ein Eingriff in das Regelsystem der Brennkraftmaschine 7 notwendig. Erfindungsgemäss erfolgt daher mit dem Zuschalten der Hilfsmassnahme 6 ein Umschalten auf ein spezielles Regelregime, symbolisiert durch eine zweite Regeleinheit 5. Die Regeleinheit 5 erhält bestimmte Betriebsdaten der Brennkraftmaschine 7, symbolisiert durch Pfeil cᵢ, und sendet zur Regelung der Brennkraftmaschine 7 Regelsignale c an die Brennkraftmaschine 7 zurück. Die Betriebsdaten cᵢ, die während des Betriebes mit der Hilfsmassnahme 6 an die Regeleinheit 5 geschickt werden, können dabei die gleichen Daten sein, die während des Betriebes ohne Hilfsmassnahme 6 an die Regeleinheit 4 (Pfeil bᵢ) geschickt werden, es können aber auch andere oder teilweise andere Daten sein. Zu einer Differenz, die den Schwellwert überschreitet, kann es beispielsweise aufgrund von Betriebsstörungen der Brennkraftmaschine 7 kommen oder aber, wenn von einem Verbraucher 1 zusätzliche Leistung verlangt wird, und ein neuer Sollwert in Form einer neu zu erreichenden Drehzahl, Pfeil aⁿₛ, vorgegeben wird. Statt in einem übergeordneten Regler 8 wie in Fig. 1 dargestellt, kann ein Umschalten auf den Betrieb mit Hilfsmassnahme 6 und der zweiten Reglereinheit 5 auch mit Hilfe der ersten Reglereinheit 4, mit Hilfe einer Hilfsmassnahmenregelung oder auch manuell erfolgen (jeweils nicht graphisch dargestellt).

Während die Regelsignale b die von der ersten Regeleinheit 4 an die Brennkraftmaschine 7 geschickt werden, nur von Parametern der Brennkraftmaschine 7 abhängen, hängen die Regelsignale c, die von der zweiten Regeleinheit 5, dem speziellen Regelregime, an die Brennkraftmaschine 7 geschickt werden, von der Brennkraftmaschine 7 und von der Hilfsmassnahme 6 ab. Mit anderen Worten: Die Brennkraftmaschinen-Soll-Werte und Brennkraftmaschinen-Schwellwerte, die in Form von Funktionen und Tabellenzuordnungen in der Regeleinheit 4 abgelegt sind, sind nur von Parametern der Brennkraftmaschine 7 abhängig; die Brennkraftmaschinen-Soll-Werte und Brennkraftmaschinen-Schwellwerte, die in der Regeleinheit 5 abgelegt sind, sind dagegen Funktionen und Tabellenzuordnungen in Abhängigkeit von Parametern der Brennkraftmaschine 7 und der Hilfsmassnahme 6. Sobald die Hilfsmassnahme 6 zugeschalten wird, erfolgt also auch die Ausregelung der Brennkraftmaschinen-Ist-Werte auf Soll- bzw. Schwellwerte, die von der Hilfsmassnahme abhängig sind.

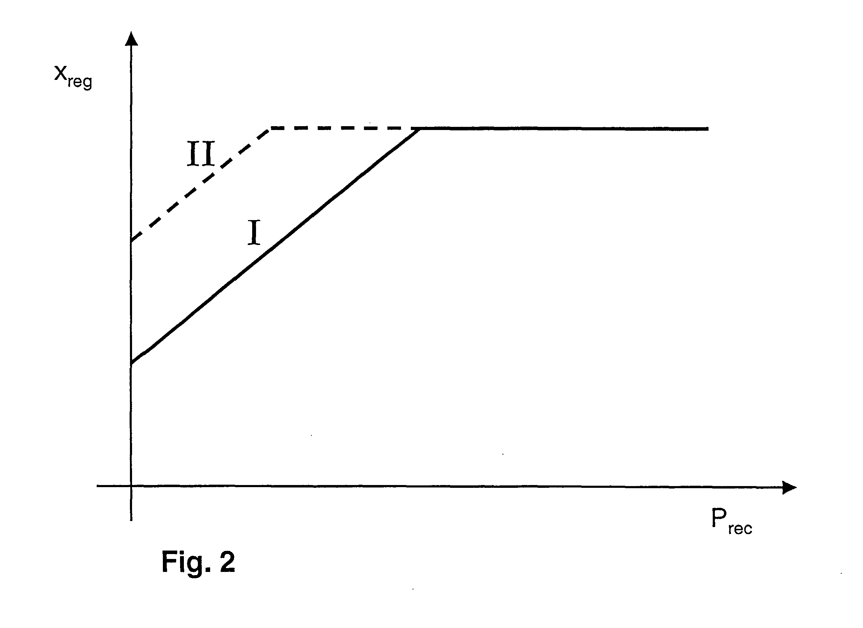

Ein Beispiel für die Änderung einer Schwellwertfunktion bei einem Wechsel vom Betrieb ohne Hilfsmassnahme 6 zum Betrieb mit Hilfsmassnahme 6 zeigt Figur 2. Als Beispiel ist der Schwellwert für die Brennstoffmenge x_{reg} angegeben, der maximal bei einem bestimmten Receiverdruck p_{rec} einer Brennkammer zugeführt werden darf. Kurve I zeigt diese Schwellwertfunktion für den Betrieb ohne Hilfsmassnahme 6, Kurve II diese Schwellwertfunktion im Betrieb mit Hilfsmassnahme 6. In diesem Beispiel wird als Hilfsmassnahme 6 zusätzlich Luft in die Brennkammern eingeblasen. Wie aus dem Diagramm klar hervorgeht kann bei zugeschalteter Hilfsmassnahme 6 im Bereich geringer Receiverdrücke den Brennkammern der Brennkraftmaschine 7 eine grössere Brennstoffmenge zugeführt werden als während des Betriebes ohne Hilfsmassnahme 6. Dies ist möglich, weil aufgrund der zusätzlich in die Brennkammern eingeblasenen Luft mehr Sauerstoff zur Verfügung steht, und somit eine grössere Menge Brennstoff verbrannt werden kann. Im Bereich höherer Receiverdrücke laufen die Kurven I und II dann auf einen gemeinsamen Grenzwert zu.

Bisher wurde bei Bedingungen, wie den eben geschilderten, die Möglichkeit bei einem Lastsprung mit Zuschaltung einer Hilfsmassnahme 6 grössere Brennstoffmengen zu verbrennen und damit eine bessere Beschleunigung zu erreichen, nicht genutzt, weil auch beim Zuschalten der Hilfsmassnahme 6 die Ausregelung der Brennkraftmaschine 7 mit der Schwellwertfunktion der Brennkraftmaschine 7 gemäss Kurve I erfolgt ist. Bei dem vorgeschlagenen Verfahren aber erfolgt erfindungsgemäss mit dem Zuschalten der Hilfsmassnahme 6 ein Umschalten auf die von der Brennkraftmaschine 7 und der Hilfsmassnahme 6 abhängige Kurve II der besagten Schwellwertfunktion. Es kann somit mehr Brennstoff eingespritzt und verbrannt und somit eine bessere Beschleunigung erreicht werden. Wird das erfindungsgemässe Verfahren beispielsweise mit dem hier gezeigten Schwellwert betrieben, so veranlasst die Regeleinheit 5 den Brennstoffsteller unmittelbar nach Einschalten der Hilfsmassnahme oder mit einer gewünschten Verzögerung dem Motor zusätzlichen Brennstoff zuzuführen. Die zusätzliche Menge und allenfalls die Verzögerung können fest vorgegeben sein oder sie können in Abhängigkeit der Teillastparameter auf "Vorrat" berechnet werden, um dann, wenn die Hilfsmassnahme eingeschaltet wird, ohne Zeitverzug bekannt zu sein.

Ausser der Brennstoffmenge können auch andere Parameter begrenzende Schwellwerte eingesetzt sein. Begrenzend können z.B. der maximal zulässige Zylinderdruck, der Receiverdruck, die Temperatur vor der Turbine eines als Hilfsmassnahme 6 vorgesehenen Turboladers oder das Verbrennungsluftverhältnis sein. Diese Schwellwerte können fest vorgegeben sein, sie können als Kennlinien abgelegt sein oder sie können mittels Modellen berechnet werden.

Wie dies in Fig. 1 gezeigt ist, kann oder muss parallel zur Regelung der Brennstoffzufuhr die Hilfsmassnahme 6 geregelt werden. Hierbei kann, bei Vorhandensein eines Turboladers als Vorrichtung zur Durchführung der Hilfsmassnahme 6, beispielsweise die Turboladerdrehzahl als Hilfsmassnahmen-Ist-Wert hᵢ erfasst werden. In der Regeleinheit 5 ist dann ein Schwellwert der Turboladerdrehzahl als begrenzende Grösse für den Einsatz der Hilfsmassnahme hinterlegt, bei deren Überschreiten die Hilfsmassnahme abgeschaltet oder zurückgefahren wird. Da auch bestimmte Parameter der Hilfsmassnahme 6 auch eine gewisse Abhängigkeit von Parametern der Brennkraftmaschine 7 zeigen, können die in der Regeleinheit 5 hinterlegten Funktionen und Tabellenzuordnungen für Hilfsmassnahmen-Ist-Werte u/o Hilfsmassnahmen-Schwellwerte ihrerseits abhängig von fixen oder aktuell erfassten Parametern der Brennkraftmaschine 7 sein. Die Regelung der Hilfsmassnahme 6 kann sehr wichtig sein, denn die Einblasung von Luft in den Verdichter eines Turboladers muss z.B. bei einer gewissen Drehzahl eingestellt werden, um nicht unzulässige Schaufelschwingungen respektive Schaufelbelastungen zu verursachen. Ein anderer Grund die Hilfsmassnahme 6 zu reduzieren oder gar auszuschalten, kann aber beispielsweise auch der maximal zulässige Zylinderdruck sein. Um nicht unnötig viel Luft zu verbrauchen, ist es sinnvoll, nicht nur die Brennstoffmenge sondern auch die Luftmenge zu regulieren. Je nach gewünschter Perfektion der Regelung sind beim Regeln der Luftmenge auch der Luftdruck und die Lufttemperatur der Hilfsluft zu berücksichtigen. Weitere mögliche Schwellwerte, Sollwerte sowie mögliche Hilfsmassnahmen 6 sind bereits weiter oben genannt worden. Wird als wichtigste Regelgrösse das Verbrennungsluftverhältnis (zugänglich über Hilfsgrössen) auf einen konstanten Wert von etwa 1,5 ausgeregelt so lässt sich Russbildung vermeiden.

Selbstverständlich wird die Hilfsmassnahme 6 in dem in Fig. 1 gezeigten Beispiel auch bei Erreichen der geforderten Leistung, d.h. also wenn die Differenz zwischen dem Brennkraftmaschinen-Ist-Wert aᵢ (in unserem Beispiel aus Fig. 1 die Drehzahl) und dem Brennkraftmaschinen-Soll-Wert aₛ geringer ist als - in diesem Beispiel - 20% des Sollwertes aₛ, abgestellt und die Regelung wieder auf die Regeleinheit 4 umgestellt.

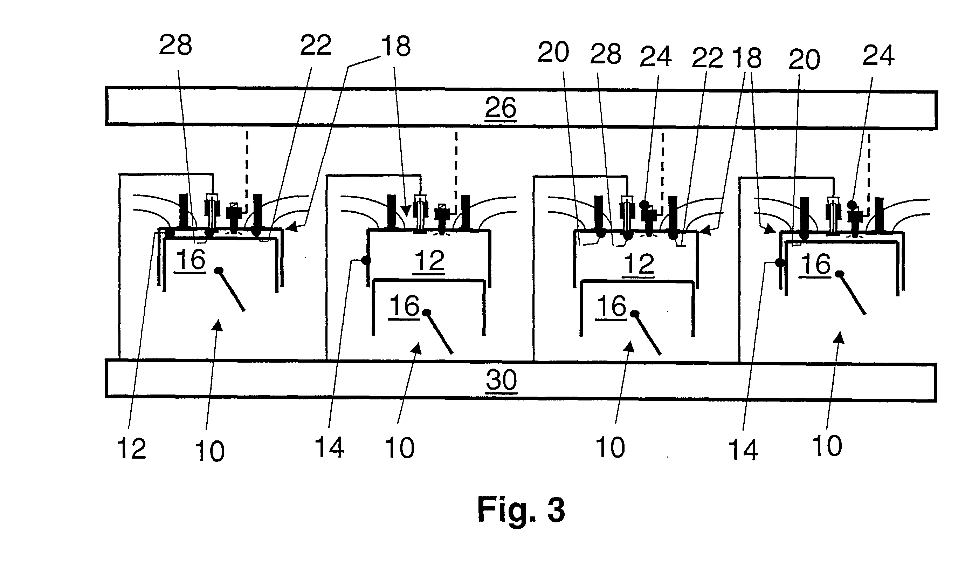

Soll die Zufuhr der Brennstoffmenge in die Brennkammern und die mittels der Hilfsmassnahme 6 zugeführte Luftmenge geregelt werden, so ist es besonders vorteilhaft, den Brennkammern nicht nur den Brennstoff mittels eines Common Rail Systems sondern auch die Luft oder allenfalls ein anderes verbrennungsförderndes Gas, wie Sauerstoff oder ein Luft-Abgasgemisch oder ähnliches, mittels eines Hochdruckleitungssystems zuzuführen, das analog dem Common Rail System für den Brennstoff konzipiert ist. Ein Beispiel hierfür ist in Fig. 3 gezeigt. Vier Zylinder 10 einer Brennkraftmaschine, die nicht näher dargestellt ist, weisen je eine Brennkammer 12 auf. Jede Brennkammer 12 wird in bekannter weise seitlich durch Zylinderwände 14, gegen eine Stirnseite durch einen verschiebbaren Kolben 16 und gegen die andere Stirnseite mit einem Zylinderkopfdeckel 18 begrenzt. Im Zylinderkopfdeckel 18 ist jeweils ein Ansaugventil 20 zum Ansaugen von Verbrennungsluft, ein Auslassventil 22 zum Ausströmenlassen der Abgase und eine Einspritzdüse 24 zum Einspritzen von Brennstoff angeordnet. Die Einspritzdüsen 24 sind wie üblich mit einem Common Rail system 26 für den Brennstoff verbunden. Statt einem bekannten, einfachen Hilfsluftventil im Zylinderkopfdeckel 18 sind in dem in Fig. 3 gezeigten erfindungsgemässen Beispiel aber Einspritzventile 28 für die Hilfsluft - oder ein anderes verbrennungsförderndes Gas - vorgesehen, die mit einem Hochdruckleitungssystem 30 verbunden sind, das analog zu dem Common Rail System 26 für den Brennstoff konzipiert ist. Die Regelung der Brennstoffmenge und der Hilfsluftmenge bei einer solchen Ausgestaltung der Brennstoff- und Hilfsluftzufuhr ist am einfachsten über einen gemeinsamen Regler zu bewerkstelligen.

Mit dem vorgeschlagenen erfindungsgemässen Verfahren wird, wie an den Beispielen gezeigt, nicht nur das transiente Verhalten der Brennkraftmaschine 7 verbessert, auch Russbildung kann vermieden werden. Auch die bisher bei grossen Brennkraftmaschinen in der Regel ausser Acht gelassene Tatsache, dass die Regelung im Verhältnis zur Drehzahl sehr rasch erfolgen muss, da die Betriebsbedingungen von einem Verbrennungszyklus eines Zylinders zum nachfolgenden Zyklus bei der Beschleunigung oder Verzögerung der Brennkraftmaschine stark ändern kann, kann durch das Abrufen von vorbereiteten Funktionen oder Tabellenzuordnungen in einer zweiten Regeleinheit 5 berücksichtigt werden. Die zahlreichen Parameter von Brennkraftmaschine, Aufladesystem und Hilfsmassnahmen stehen zueinander in einem komplizierten gegenseitigen Abhängigkeitsverhältnis, das durch das erfindungsgemässen Verfahren berücksichtigt wird. Generell kann also gesagt werden, dass mit dem erfindungsgemässen Verfahren das Potential einer Hilfsmassnahme 6 besser ausgeschöpft werden kann, indem bei der Regelung zusätzliche Informationen genutzt werden.

### Bezugszeichenliste

- 1: Verbraucher
- 2: Box
- 4: erste Reglereinheit
- 5: zweite Regeleinheit
- 6: Hilfsmassnahme
- 7: Brennkraftmaschine
- 8: übergeordneter Regler
- 10: Zylinder
- 12: Brennkammer
- 14: Zylinderwand
- 16: Kolben
- 18: Zylinderkopfdeckel
- 20: Einlassventil
- 22: Auslassventil
- 24: Einspritzdüse
- 26: Common Rail System
- 28: Einspritzventil
- 30: Hochdruckleitungssystem

## Patentansprüche

1. Verfahren zum Betreiben einer mit mindestens einer Brennkammer versehenen Brennkraftmaschine, bei dem im Falle einer Lastaufnahme eine Hilfsmassnahme zur Beschleunigung der Brennkraftmaschine vorgesehen ist und bei dem mindestens ein Brennkraftmaschinen-Ist-Wert auf einen zugehörigen Brennkraftmaschinen-Soll-Wert ausgeregelt wird, **dadurch gekennzeichnet, dass** die Ausregelung in Abhängigkeit der Hilfsmassnahme (6) erfolgt.

2. Verfahren nach Anspruch **1, dadurch gekennzeichnet, dass** der Brennkraftmaschinen-Soll-Wert und/oder ein Brennkraftmaschinen-Schwell-Wert abhängig von der Hilfsmassnahme (6) gewählt wird, wobei für einen Brennkraftmaschinen-Soll-Wert bzw. Brennkraftmaschinen-Schwell-Wert insbesondere eine von der Hilfsmassnahme 6 abhängige Funktion oder eine von der Hilfsmassnahme (6) abhängige Tabellenzuordnung gewählt wird.

3. Verfahren nach Anspruch 1 oder 2, **dadurch gekennzeichnet, dass** wenigstens ein Hilfsmassnahmen-Ist-Wert (hᵢ) während des Betriebes mit der Hilfsmassnahme (6) aktuell erfasst wird und die Ausregelung wenigstens eines der mindestens einen Brennkraftmaschine-Ist-Werte in Abhängigkeit von wenigstens einem der mindestens einen aktuell erfassten Hilfsmassnahmen-Ist-Werte (hᵢ) erfolgt.

4. Verfahren nach einem der Ansprüche 1 bis 3, **dadurch gekennzeichnet, dass** wenigstens einer der mindestens einen Hilfsmassnahmen-Ist-Werte (hᵢ) mit einem Hilfsmassnahmen-Schwellwert verglichen wird und bei Erreichen oder Überschreiten bzw. Unterschreiten des Hilfsmassnahmen-Schwellwertes die Hilfsmassnahme (6) zurückgefahren oder abgeschaltet wird.

5. Verfahren nach einem der Ansprüche 1 bis 4, **dadurch gekennzeichnet, dass** ein oder mehr der mindestens einen Hilfsmassnahmen-Ist-Werte auf einen Hilfsmassnahmen-Soll-Wert und/oder Hilfsmassnahmen-Schwellwert ausgeregelt wird.

6. Verfahren nach Anspruch 4 oder 5, **dadurch gekennzeichnet, dass** ein oder mehr Hilfsmassnahmen-Soll-Werte und/oder ein oder mehr Hilfsmassnahmen-Schwellwerte ihrerseits abhängig von einem oder mehreren Brennkraftmaschinen-Werten im Sinne einer Funktion oder einer wählbaren Tabellenzuordnung ist/sind.

7. Verfahren nach einem der Ansprüche 1 bis 5, **dadurch gekennzeichnet, dass** wenigstens einer der mindestens einen Brennkraftmaschinen-Ist-Werte mit einem Brennkraftmaschinen-Schwellwert verglichen wird und bei Erreichen oder Überschreiten bzw. Unterschreiten des Brennkraftmaschinen-Schwellwertes die Hilfsmassnahme (6) zurückgefahren oder abgeschaltet wird.

8. Verfahren nach Anspruch 4 oder 6, **dadurch gekennzeichnet, dass** der Brennkraftmaschinen-Soll-Wert einen Brennkraftmaschinen-Schwellwert darstellt und/oder der Hilfsmassnahmen-Soll-Wert einen Hilfsmassnahmen-Schwellwert darstellt, so dass der jeweilige. Ist-Wert auf den jeweiligen Schwellwert ausgeregelt wird, wobei der Schwellwert so ausgelegt ist, dass nur bei seinem Überschreiten bzw. Unterschreiten die Hilfsmassnahme zurückgefahren bzw. abgeschaltet wird.

9. Verfahren nach einem der Ansprüche 1 bis 8, **dadurch gekennzeichnet, dass** als Hilfsmassnahmen (6) ein Einblasen von Luft respektive eines Verbrennungsgemisches in einen Receiver vor der mindestens einen Brennkammer und/oder ein Einblasen von Luft resp. Verbrennungsgemisch direkt in die mindestens eine Brennkammer und/oder Variable Ventilsteuerzeiten und/oder bei Vorhandensein eines Turboladers eine Eindüsung von Luft bzw. eines Verbrennungsgemisches in den Verdichter und/oder eine Lufteindüsung in bzw. vor einer Turbine des Turboladers, und/oder die Nutzung eines Waste Gates parallel zur Turbine und/oder die Nutzung einer Bypassleitung von einem Verdichter des Turboladers zu seiner Turbine und/oder bei Vorhandensein eines Turboladers mit variabler Turbinengeometrie eine entsprechende Änderung der Turbinengeometrie und/oder bei Vorhandensein eines Turboladers mit elektrischen Maschine ein Einsatz der elektrischen Maschine vorgesehen ist.

10. Verfahren nach einem der Ansprüche 1 bis 9, **dadurch gekennzeichnet, dass** als ein Brennkraftmaschinen-Ist-Wert(e) die Drehzahl der Brennkraftmaschine (7) und/oder die Brennstoffmenge und/oder die Temperatur des Abgases und/oder der Zylinderdruck und/oder der Receiverdruck und/oder das Verbrennungsluftverhältnis und/oder Öldruck usw. erfasst werden.

11. Verfahren nach einem der Ansprüche 1 bis 10, **dadurch gekennzeichnet, dass** als Hilfsmassnahmen-Ist-Wert(e) das Verhältnis von Verbrennungsluft zu Brennstoffgemisch und/oder bei Vorhandensein eines Turboladers das Verdichterdruckverhältnis und/oder die Temperatur vor einer Turbine und/oder die Turboladerdrehzahl und/oder die Lagertemperatur und/oder Lagerschwingungen usw. erfasst werden.

12. Verfahren nach einem der Ansprüche 1 bis 11, **dadurch gekennzeichnet, dass** als Brennkraftmaschinen-Ist-Wert die der Brennkammer (7) zugeführte Brennstoffmenge erfasst und bei Lastaufnahme mit Hilfsmassnahme (6) insbesondere auf den als Funktion vom Receiverdruck (p_{rec}) und von der Hilfsmassnahme (6) vorgegebenen Soll-Wert und/oder Schwell-Wert ausgeregelt wird.

13. Verfahren nach Anspruch 12 **dadurch gekennzeichnet, dass** mehrere Brennkammern (12) vorhanden sind und die Brennstoffmenge für jede Brennkammer (12) als eigenständiger Brennkraftmaschinen-Ist-Wert erfasst und ausgeregelt wird.

14. Verfahren nach Anspruch 13, **dadurch gekennzeichnet, dass** der Brennstoff den einzelnen Brennkammern (12) mit Hilfe eines Common-Rail-Systems (26) zugeführt wird.

15. Verfahren nach Anspruch 13, **dadurch gekennzeichnet, dass** auch die Zufuhr eines verbrennungsfördernden Gases, wie Sauerstoff oder Luft, mittels eines Hodruckleitungssystems (30) erfolgt, das analog einem Common Rail System (26) für Brennstoff konzipiert ist, wobei die Regelung der zugeführten Brennstoffmenge und die Regelung der zugeführten Sauerstoffmenge vorzugsweise mit Hilfe eines gemeinsamen Reglers erfolgt, und als verbrennungsförderndes Gase vorzugsweise Luft zugeführt wird.

16. Verfahren nach einem der Ansprüche 1 bis 15, **dadurch gekennzeichnet**, bei stationärem Betrieb die Ausregelung des mindestens einen Brennkraftmaschinen-Ist-Wertes mit Hilfe einer ersten Reglereinheit (4) auf einen Brennkraftmaschinen-Soll-Wert erfolgt, der nur von der Brennkraftmaschine (7) abhängt, und dass bei Lastaufnahme mit dem Einsetzen der Hilfsmassnahme (6) die Ausregelung mit Hilfe einer zweiten Reglereinheit (5) in Abhängigkeit von der Brennkraftmaschine (7) und der Hilfsmassnahme (6) erfolgt, wobei der Wechsel von der ersten Reglereinheit (4) auf die zweite Reglereinheit (5) manuell oder mit Hilfe der ersten Reglereinheit (4) oder mittels einer Hilfsmassnahmensteuerung oder mittels einer übergeordneten Regeleinheit (8) erfolgt.

17. Verfahren zum Betreiben einer Brennkraftmaschine mit mehreren Brennkammern (12) bei dem den Brennkammern (12) neben dem Brennstoffgemisch zumindest zeitweise Sauerstoff zugeführt wird, **dadurch gekennzeichnet, dass** die Sauerstoffzufuhr mittels eines Hochdruckleitungssytems (30) erfolgt, das analog den bekannten Common-Rail-Systemen (26) für Brennstoff konzipiert ist, wobei der Sauerstoff vorzugsweise in Form von verdichteter Luft zugeführt wird.

18. Verfahren nach Anspruch 17, **dadurch gekennzeichnet, dass** Sauerstoffzufuhr geregelt erfolgt und auf eine zugeführte Brennstoffmenge abgestimmt ist, wobei die Regelung der zugeführten Sauerstoffmenge und der zugeführten Brennstoffmenge vorzugsweise mit Hilfe eines gemeinsamen Reglers erfolgt.
